Europäisches Patentamt

European Patent Office

Office européen des brevets

(19)

(11) Publication number: **0 072 092**
A2

# EUROPEAN PATENT APPLICATION

(12)

(21) Application number: **82303254.5**

(22) Date of filing: **22.06.82**

(51) Int. Cl.³: **B 62 D 55/08**

---

(30) Priority: **10.08.81 PC /US81/010 68**

(71) Applicant: **CATERPILLAR TRACTOR CO., 100 Northeast Adams Street, Peoria Illinois 61629 (US)**

(43) Date of publication of application: **16.02.83 Bulletin 83/7**

(72) Inventor: **Livesay, Richard E., 1011 W. Deerbrook Drive, Peoria Illinois 61615 (US)**

(74) Representative: **Jackson, Peter Arthur et al, GILL JENNINGS & EVERY 53 to 64, Chancery Lane, London WC2A 1HN (GB)**

(84) Designated Contracting States: **FR GB IT**

---

(54) **Track-laying vehicle undercarriage.**

(57) An undercarriage (12) for a track of a tracklaying vehicle (14) has links (18, 34) carrying rollers (29, 44) and pivotally connected to a frame (16). A portion (20) of the link (18) overlies a portion (38) of the link (34) so that each link is movable in response to the other to provide load sharing and the possibility of utilizing an odd number of rollers.

EP 0 072 092 A2

- 1 -

CATERPILLAR TRACTOR CO.                    GJE 5082/089
TRACK-LAYING VEHICLE UNDERCARRIAGE

This invention relates generally to endless track undercarriages and more particularly to support roller configurations suited for use in soft-bottom undercarriages of track-laying vehicles.

Most land vehicles utilize either wheels or crawler tracks for the purpose of supporting the frame of the vehicle above the ground and for converting power into motion. Crawler tracks, which typically have a relatively great area of ground contact, are fairly rugged and can be designed to conform substantially to depressions and other irregularities in the ground. They are most commonly chosen for vehicles which will be operating where conditions are severe, such as deep snow battlefields, marshy areas, heavy construction sites, etc.

Typically, endless track undercarriages include a front and a rear idler, which are freely turning wheels around which a track is placed. Several freely turning rollers are mounted between the idlers to transfer the weight of the vehicle to the ground by limiting the upward movement of the track. Further included is a track drive sprocket which serves to convert power from the engine into motion of the tracks, and hence of the vehicle. The idlers and rollers are supported by a roller frame. In many designs, the drive sprocket is located at the extreme rear of the crawler track instead of one of the idlers.

The technology of endless track undercarriages has advanced to the point where they are reasonably reliable durable and efficient. However, there is much yet to be done toward improving the ability of these undercarriage systems to absorb mechanical shocks. It would be further advantageous to improve the load sharing capability of the track rollers. This would equalize the pressure exerted upon the ground by each incremental length of the track. Advancement in these areas will serve to increase the rate at which the vehicles can travel, which is currently limited in most cases by the amount of mechanical shock the vehicle and its operator can absorb. It will also serve to improve the vehicle performance in mud and other conditions where a poor distribution of weight across the track can result in the vehicle becoming unduly mired in the surface across which it is travelling.

In existing crawler track undercarriage systems, mechanical shock is generally dealt with in two manners. The more obvious is through use of traditional shock absorbers. In US-A-1,836,446, a system is detailed in which the rollers are rotatably mounted on an end of a connecting member. Another end is rotatably connected to the roller frame. The freedom of movement of the member and hence the roller is limited by a coil spring. A related system, using a resilient pad placed between the connecting member and a mechanical stop, is described in US-A-3,774,708. US-A-1,317,651 teaches a similar system involving leaf springs. A combination of a leaf spring suspension for the roller-roller frame mounting and the encasement of each roller axle in a resilient material is set forth in US-A-1,547,053.

A second commonly used system for lessening the amount of shock and the magnitude of the point loadings transferred from the crawler tracks to the remainder of the vehicle involves the use of some load transfer mechanism. In its simplest form, this is achieved by rotatably connecting two or more rollers to a rigid member known as a bogey which is pivotally connected to the roller frame. When an undercarriage with bogey-mounted rollers passes over a projection, such as a rock, the bogey is caused to rotate about its pivotal connection. This allows the track to deflect upwardly at the point overlying the rock while forcing that part of the track under the corresponding adjacent roller to move downwardly. In this manner, the pressure exerted upon the ground by the track is reduced at points where a crawler undercarriage with non-bogied rollers would cause very great loading. Compensation is achieved through the increased loading under the other roller on the bogey. In this manner, the occurrence of great variations in the load borne across the length of the track is mitigated. With such a system of ground pressure equalization, the vehicle tends to bog down less often in soft materials such as snow and mud. Mechanical shocks resulting from passing over bumps, ridges, etc. are lessened since the crawler track has a certain degree of resistance. As an additional refinement of such a system, shock absorbing means can be incorporated into the bogie-roller frame mounting of the bogied rollers. See, for example, US-A-3,774,708.

An existing difficulty in mounting the rollers on bogies is that bogies are best suited for two rollers. With three rollers on a single bogey, it is likely that one roller will often exert no pressure on the track whatsoever. For example, this would be the case where the ground is perfectly level except for a deep depression under one of the three rollers. In conventional under-

carriages with but a single roller which is individually connected to the roller frame, a bogey system is not possible because there is no available load sharing element. Therefore, while adequate technology exists for resiliently mounting an even number of rollers on a roller frame, a difficulty arises when it is necessary to include an odd number of resiliently biased rollers on a crawler track undercarriage. The addition of a single roller may be necessary, for example, to accommodate a specific length of track on the ground for a given vehicle weight. An early solution to this problem was provided in US-A-1,906,116, which proposed mounting a roller and an idler on a single bogie. There was no provision, however, for any shock absorbing means other than that inherent to the bogie. Consequently, this arrangement transmitted a great deal of mechanical shock to the track frame which dictated the need for lower speeds and strengthened vehicle components.

U.S.-A-1,836,446 does describe a means for resiliently mounting a single roller. However, this scheme is inferior from the standpoint of load distribution to systems using bogey mountings, and additionally would be unduly expensive to implement.

In recent years, designers of undercarriages have developed undercarriages having resiliently mounted rollers. In many of these undercarriages a given roller can transfer a portion of the loading to which it is subjected to an adjacent roller. For undercarriages of certain sizes in which it is desired to obtain the most even ground pressure attainable, the utilization of an odd number of rollers is preferred. It is believed that no existing soft-bottom undercarriage is known for accommodating an odd number of rollers. It is further desirable to obtain the optimum load transference and resilience among the rollers.

In accordance with the invention, an undercarriage for a track of a track-laying vehicle comprises a support frame; a first link having first and second portions and a pivot portion between the first and second portions, the first link being pivotably connected to the support frame at the pivot portion; a second link having a first portion and a pivot portion, the second link being pivotably connected to the support frame at the second link pivot portion, and the second link first portion being adjacent to the first link first portion   whereby the first and second links are each movable in response to movement of the other; a first wheel connected to the first link second portion; and a second wheel connected to the second link first portion, the axis of the second wheel being between the first link pivot portion and the second link pivot portion.

As will be explained in more detail, the present development permits load transference between roller assemblies which are not mechanically connected. The undercarriage may have an odd number of rollers with each roller being resiliently mounted and capable of transferring and receiving loadings from at least one other roller.

In a preferred construction, the first link first portion is spaced a vertical distance, particularly extends to a position above, the second link first portion. A resilient device is then preferably provided between the first link first portion and the second link first portion.

For a better understanding of the present invention, reference may be made to the accompanying drawings, in which:-

Figure 1 is a diagrammatic side view of part of one undercarriage in accordance with the present invention; and,

Figure 2 is a diagrammatic side view of a track-laying tractor incorporating a second undercarriage in accordance with the present invention.

A multiple roller bogey assembly 10 can be incorporated in the undercarriage 12 of a track-laying vehicle 14.

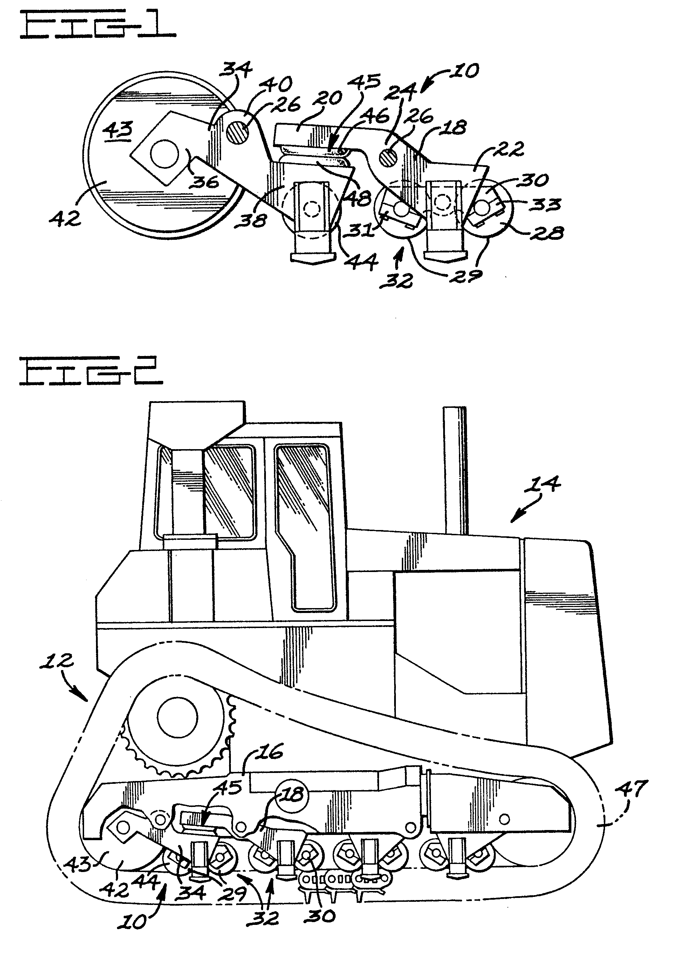

The undercarriage 12 includes a support frame 16 which provides a support for other components of the undercarriages 12. Pivotally connected to the support frame 16 is a first bogey link 18. This first bogey link 18 has first and second portions 20,22 and a pivot portion 24 located between the portions 20,22. A connecting element 26, such as a pin, passing through the pivot portion 24, pivotally joins the first link 18 to the support frame 16. Connected to the portion 22 is a first wheel 28 in the form of a track roller 29. Alternatively, two rollers 29 can be connected to the portion 22 by a minor bogey 30, having first and second opposed end portions 31,33, as shown in Figures 1 and 2. The coupled rollers 29 and the minor bogey 30 form a roller assembly 32. The first wheel 28 can be considered to be a portion of this roller assembly 32.

A second link 34 is pivotally connected to the support frame 16 at a location spaced from the first bogey link pivot portion 24. This second link 34 has first and second portions 38,36 and a pivot portion 40 intermediate these portions 36,38. A connecting element 26, such as a pin, passes through the pivot portion 40 and pivotally joins the second link 34 to the support frame 16. Connected to the portion 36 is a wheel 42 which is shown as an idler 43. In an alternative construction, this wheel 42 can be a roller 29. The wheel 42, if a roller 29, can be a portion of a roller assembly.

A wheel 44, preferably a roller 29, is rotatively connected to the second link portion 38. This wheel 44 is a portion of a roller assembly 32 similar to that detailed previously. The various wheels, idlers and sprockets support an endless track chain 47 in a manner well known.

The first link portion 20 is positioned above the second link portion 38. A resilient device 45 is positioned intermediate the links 18 and 34. This device comprises a first resilient element 46 attached to the underside of the first link portion 20, and a second resilient element 48 attached to the upper side of the second link portion 38. These elements 46,48 are in contact one with the other and permit the links 18 and 34 to act one against the other through the resilient elements 46,48 in a cushioned manner. In the preferred arrangement each resilient element is an elastomeric pad such as a rubber biscuit. In an alternative arrangement the resilient device 45 comprises a single elastomeric pad.

In another construction of the multiple roller support assembly 10, the second link 34 has only a pivot portion 40 and a portion 38. The link portion 38 is adjacent and beneath the first bogey link portion 20. Both the second link portion 38 and the first link portion 22 have a roller 29 attached thereto. In such an alternate arrangement at least one of the second link portion 22 can have a roller assembly 32 attached thereto. This would closely resemble that shown in Figure 1 with the second link portion 36 and the corresponding idler 43 deleted.

In use, the first bogey link end 22 and the second link end 38 are each biased downwardly in response to an upward force acting on the other. The resilient device 45 intermediate the first link portion 20 and the second link portion 38 provides the multiple roller bogey assembly 10 with resiliency and renders it suitable for use in a soft bottom undercarriage 12.

More specifically, in the operation of the bogey assembly 10 load transference and resilience are advantageously provided. An upward force acting on the wheel 44 serves to force the second link portion 38 upwardly. In response, the second link portion 36 rotates downwardly transferring a portion of the load to the wheel 42. Simultaneously, the upward displacement of the second link portion 38 acts on the first link portion 20 through the resilient device 45. The first link portion 20 is displaced upwardly as a result, forcing the first link portion 22 downwardly. As the first wheel 28 is rotatively connected to the first link portion 20, upward displacement of the wheel 44 results in downward displacement of the wheel 28. This results in additional load transference away from the wheel 44 in response to a sudden loading of the wheel 44. Similarly, load transference occurs for excessive loading of the wheel 28.

Either the wheel 28 and 44 can be an idler 43 and any of the three wheels 28,42,44 can be an individual roller 29 or a roller assembly 32. This provides the assembly 10 with great flexibility and adapts it to be used at the front, rear or intermediate portions of an undercarriage 12.

- 9 -

CLAIMS

1.    An undercarriage (12) for a track of a track-laying vehicle (14), the undercarriage comprising a support frame (16); a first link (18) having first and second portions (20,22) and a pivot portion (24) between the first and second portions (20,22), the first link (18) being pivotably connected to the support frame (16) at the pivot portion (24); a second link (34) having a first portion (38) and a pivot portion (40), the second link (34) being pivotably connected to the support frame (16) at the second link pivot portion (40),and the second link first portion (38) being adjacent to the first link first portion (20)    whereby the first and second links are each movable in response to movement of the other; a first wheel (28) connected to the first link second portion (22); and a second wheel (44) connected to the second link first portion (38), the axis of the second wheel (44) being between the first link pivot portion (24) and the second link pivot portion (40).

2.    An undercarriage (12) according to claim 1, wherein the first link first portion (20) is spaced a vertical distance from the second link first portion (38).

3.    An undercarriage (12) according to claim 2, wherein the first link first portion (20) extends to a position above the second link first portion (38).

- 10 -

0072092

4.    An undercarriage according to any one of the preceding claims, wherein a resilient device (45) is provided between the first link first portion (20) and the second link first portion (38).

5.    An undercarriage (12) according to claim 4, wherein the resilient device includes a resilient element (46) connected to the first link first portion (20) at  a position between the first link first portion (20) and the second link first portion (38).

6.  .  An undercarriage (12) according to claim 4 or claim 5, wherein the resilient device includes a resilient element (48) connected to the second link first portion (38) at a position between the second link first portion (38) and the first link first portion (20).

7.    An undercarriage (12) according to any one of the preceding claims, wherein the first and second wheels (28,44) are rollers.

8.    An undercarriage (12) according to any one of the preceding claims, further including a minor bogey (30) having first and second opposed end portions (31,33) and being pivotally connected to the first link second portion (22); the first wheel (28) being a roller connected to the first end portion (31) of the minor bogie (30); and a further roller (29) being connected to the second end portion (33) of the minor bogie (30).

9.    An undercarriage (12) according to any one of the preceding claims, wherein the second link (34) includes a second portion (36), the second link pivot portion (40) being positioned intermediate the second link first and second portions (38,36), and a further wheel (42) being connected to the second link second portion (36).

10.    An undercarriage (12) according to claim 9, wherein the further wheel (42) is an idler.

**FIG-1**

**FIG-2**